# EUROPEAN PATENT APPLICATION

(11) **EP 4 292 719 A1**
(43) Date of publication of application: **20.12.2023**
(21) Application number: 21925756.5
(22) Date of filing: 20.10.2021
(51) Int. Cl.: B05D 1/04, B05D 1/32, H01M 10/0562, H01M 10/0585, B05B 5/08

(54) **ELECTROSTATIC FILM FORMATION DEVICE AND METHOD FOR MANUFACTURING ALL SOLID SECONDARY BATTERY USING SAME**

(30) Priority: 10.02.2021 JP 2021019408
(71) Applicant: Hitachi Zosen Corporation, Osaka-shi, Osaka 559-8559 (JP)
(72) Inventor: OKAMOTO Kenji, Osaka-shi, Osaka 559-8559 (JP); FUKUI Hideyuki, Osaka-shi, Osaka 559-8559 (JP)
(74) Representative: Grünecker Patent- und Rechtsanwälte PartG mbB
(86) International application number: PCT/JP2021/038707
(87) International publication number: WO 2022/172509

(57) **Abstract**

There is provided an electrostatic film formation device (1) including a powder feeder (2) feeding powder (P), a substrate (5) on which a powder film (F) is to be formed from the powder (P), and a DC power supply (3) applying voltage to the powder feeder (2) and the substrate (5). The DC power supply (3) applies the voltage to draw the powder (P) from the powder feeder (2) to the substrate (5) with electrostatic force. The electrostatic film formation device (1) further includes a masking member (4) disposed between the powder feeder (2) and the substrate (5). The masking member (4) is formed with a passing port (40) allowing the powder (P) to pass from the powder feeder (2) to the substrate (5). The masking member (4) is disposed in the state where the masking member (4) is not in contact with the powder film (F) to be formed.

## Description

### Technical Field

The present invention relates to an electrostatic film formation device and a method for manufacturing an all-solid secondary battery using the electrostatic film formation device.

### Background Art

In an electrostatic film formation device, usually, powder is caused to drop from a powder feeder such as a screen while being charged, and the powder is received by a substrate that is charged to have a polarity opposite to the polarity of the powder. A powder film is thereby formed on the substrate. The use of an electrostatic film formation device brings such an advantage that powder is prevented from scattering to fall outside a substrate because the powder dropping from a powder feeder is attracted to the substrate by electrostatic force.

As described in Japanese Patent Laid-Open No. 2012-140016 (hereinafter, Patent Literature 1), a configuration in which powder is rubbed onto a screen from above with a roller has been proposed as a powder feeder for a conventional electrostatic film formation device. As Patent Literature 1 describes in paragraphs [0014] and [0015] and illustrates in FIG. 2, a masking member (masking sheet 15) is mounted on a substrate (object 1) that receives powder (functional powder 13) dropping from a powder feeder (screen 10). This clearly establishes the boundary between a location where a powder film is formed and a location where the powder film is not formed on the substrate (object 1). Therefore, the contours of the powder film are clear.

### Summary of Invention

### Technical Problem

In the electrostatic film formation device (electrostatic screen printing device) described in Patent Literature 1, when the masking member (masking sheet 15) is detached from the substrate (object 1) after a powder film has been formed by using the masking member (masking sheet 15), part of the powder film may adhere to the masking member (masking sheet 15), and the powder film may be damaged. Thus, with the electrostatic film formation device (electrostatic screen printing device) described in the Patent Literature 1, a formed powder film may be damaged. A problem with the electrostatic film formation device (electrostatic screen printing device) is that a powder film cannot be formed with high precision.

Hence, the present invention has an object to provide an electrostatic film formation device that is capable of forming a powder film with high precision and a method for manufacturing an all-solid secondary battery using the electrostatic film formation device.

### Solution to Problem

To solve the problem, an electrostatic film formation device according to a first invention is an electrostatic film formation device including a powder feeder that feeds powder;
a substrate on which a powder film is to be formed from the powder;
a DC power supply that applies voltage to the powder feeder and the substrate to draw the powder from the powder feeder to the substrate with electrostatic force; and
a masking member that is disposed between the powder feeder and the substrate and has a passing port allowing powder to pass from the powder feeder to the substrate, wherein
the masking member is disposed in a state where the masking member is not in contact with the powder film to be formed.

An electrostatic film formation device according to a second invention further includes, in the electrostatic film formation device according to the first invention, a spacer that is disposed between the masking member and the substrate, wherein
the spacer is disposed outside the powder film to be formed on the substrate.

In an electrostatic film formation device according to a third invention, the spacer in the electrostatic film formation device according to the second invention is an insulator.

In an electrostatic film formation device according to a fourth invention, the spacer in the electrostatic film formation device according to the second or third invention has elasticity and is in close contact with the masking member and the substrate.

In an electrostatic film formation device according to a fifth invention, the DC power supply in the electrostatic film formation device according to one of the first to fourth inventions also applies, to the masking member, voltage having a polarity identical to the polarity of the voltage to the substrate.

An electrostatic film formation device according to a sixth invention further includes, in the electrostatic film formation device according to the fifth invention: a movement mechanism that separates the powder feeder and the substrate from each other until an electric field between the powder feeder and the substrate assumes a value less than a predetermined value;
a powder avoidance unit that prevents the powder isolated from the masking member from adhering to the powder film formed on the substrate; and
a voltage cutoff mechanism that cuts off voltage applied to the powder feeder and the masking member by the DC power supply in a state where the powder does not adhere to the powder film formed on the substrate.

In an electrostatic film formation device according to a seventh invention, the powder avoidance unit in the electrostatic film formation device according to the sixth invention is a retraction mechanism that retracts the masking member to the position at which the powder isolated from the masking member does not adhere to the powder film formed on the substrate, and
the electrostatic film formation device according to the seventh invention further includes a cleaning mechanism that removes the powder from the retracted masking member.

A method for manufacturing an all-solid secondary battery according to an eighth invention is a method for manufacturing an all-solid secondary battery that includes an electrode current collector and a powder film, the method using the electrostatic film formation device according to one of the first to seventh inventions, the method including:
a step of preparing the electrode current collector as the substrate of the electrostatic film formation device; and
a step of forming, by the electrostatic film formation device, the powder film on the substrate being the electrode current collector.

### Advantageous Effects of Invention

The electrostatic film formation device and the method for manufacturing an all-solid secondary battery using the electrostatic film formation device enable a powder film to be formed with high precision.

### Brief Description of Drawings

[FIG. 1] FIG. 1 is a schematic sectional view of an electrostatic film formation device according to Embodiment 1 of the present invention, illustrating the state where a powder film is being formed.
[FIG. 2] FIG. 2 is a schematic sectional view of the electrostatic film formation device, illustrating the state after the powder film has been formed.
[FIG. 3] FIG. 3 is a schematic sectional view of an electrostatic film formation device according to Embodiment 2 of the present invention, illustrating the state where a powder film is being formed.
[FIG. 4] FIG. 4 is a schematic sectional view of the electrostatic film formation device, illustrating the state where, after the powder film has been formed, a substrate is moved, and voltage applied to the substrate is then cut off.
[FIG. 5] FIG. 5 is a schematic sectional view of the electrostatic film formation device, illustrating the state where, after the state illustrated in FIG. 4, voltage applied to a powder feeder and a masking member is cut off.
[FIG. 6] FIG. 6 is a schematic sectional view of an electrostatic film formation device according to Embodiment 3 of the present invention, illustrating the state after a powder film has been formed.
[FIG. 7] FIG. 7 is a schematic sectional view of the electrostatic film formation device, illustrating the state where, after the state illustrated in FIG. 6, a masking member is retracted, and powder on the masking member is removed.
[FIG. 8] FIG. 8 is a schematic configuration diagram of an all-solid secondary battery that is manufactured by using the electrostatic film formation device.
[FIG. 9] FIG. 9 is a schematic sectional view illustrating a method for manufacturing the all-solid secondary battery, illustrating the state where a positive electrode layer has been formed on a positive electrode current collector.
[FIG. 10] FIG. 10 is a schematic sectional view illustrating the method for manufacturing an all-solid secondary battery, illustrating the state where a solid electrolyte layer has been formed on the positive electrode layer.
[FIG. 11] FIG. 11 is a schematic sectional view illustrating the method for manufacturing an all-solid secondary battery, illustrating the state where a negative electrode layer has been formed on the solid electrolyte layer.

### Description of Embodiments

An electrostatic film formation device according to each of Embodiments 1 to 3 of the present invention will be described below. Subsequently, a method for manufacturing an all-solid secondary battery using the electrostatic film formation device will be described.

### [Embodiment 1]

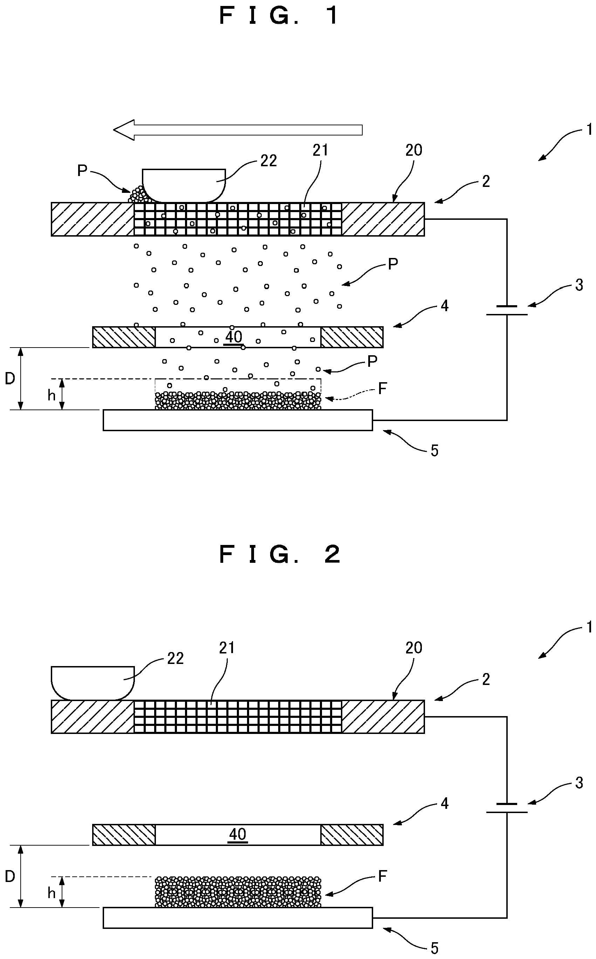

First, the electrostatic film formation device according to Embodiment 1 of the present invention will be described with reference to FIG. 1 and FIG. 2.

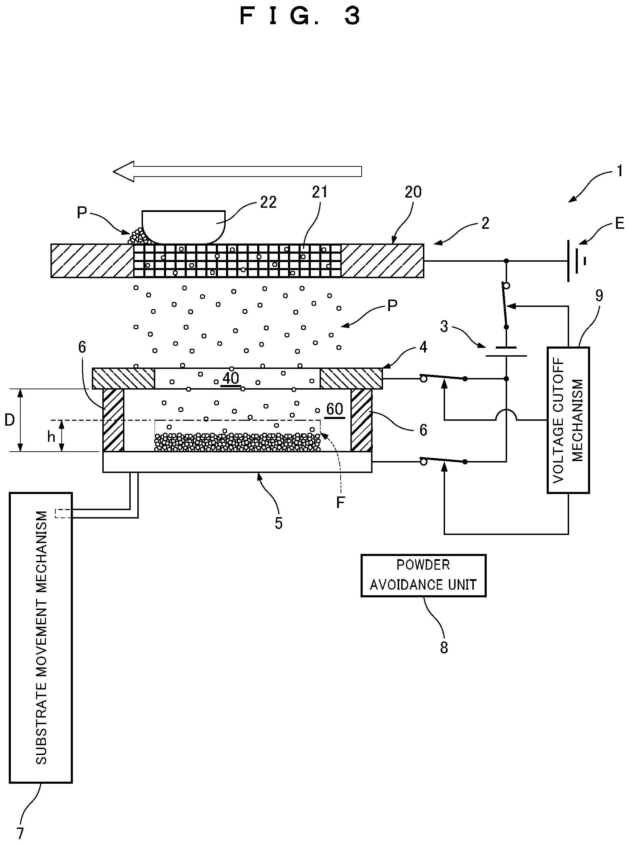

As illustrated in FIG 1, the electrostatic film formation device 1 includes a powder feeder 2 that feeds powder P, a substrate 5 on which a powder film F is to be formed from the powder P, and a DC power supply 3 that applies voltage to the powder feeder 2 and the substrate 5. The DC power supply 3 applies the voltage to draw the powder P from the powder feeder 2 to the substrate 5 with electrostatic force. The electrostatic film formation device 1 includes a masking member 4 that is disposed between the powder feeder 2 and the substrate 5. The masking member 4 is formed with a passing port 40 that allows the powder P to pass from the powder feeder 2 to the substrate 5. The masking member 4 is disposed in the state where the masking member 4 is not in contact with the powder film F to be formed. The state where the masking member 4 is not in contact with the powder film F to be formed refers to, for example, a position of the masking member 4 that is spaced from the substrate 5 by not less than a thickness h of the powder film F to be formed (h ≤ D). Naturally, the masking member 4 may move away from the substrate 5 in accordance with the thickness of the powder film F to be formed as long as the masking member 4 is in the state of not being in contact with the powder film F to be formed. The masking member 4 is retained by a retaining unit that is not illustrated in FIG. 1 nor FIG. 2. The retaining unit is, for example, a retainer that retains the masking member 4 from the sides, a spacer 6 to be described later in Embodiments 2 and 3, which is disposed between the masking member 4 and the substrate 5 and supports the masking member 4 (see FIG. 3), or the like.

As illustrated in FIG. 1, the powder feeder 2 includes, for example, an electrostatic screen printing plate 20 that is formed with a screen 21, and a rubbing body 22 that rubs the powder P into the screen 21 of the electrostatic screen printing plate 20, although the powder feeder 2 is not particularly limited as long as the powder feeder 2 is a powder feeder that feeds the powder P.

The substrate 5 is not particularly limited as long as the substrate 5 is a substrate on which the powder film F is to be formed from the powder P from the powder feeder 2. However, since the substrate 5 is a substrate on which the powder film F is to be formed from the powder P passing through the passing port 40 of the masking member 4, edges of the substrate 5 are preferably positioned outside the passing port 40.

The DC power supply 3 is not particularly limited as long as the DC power supply 3 is a DC power supply that applies, to the powder feeder 2 and the substrate 5, voltage to draw the powder P from the powder feeder 2 to the substrate 5 with electrostatic force. However, the DC power supply 3 preferably applies a negative voltage and a positive voltage to the powder feeder 2 side and the substrate 5 side, respectively.

The passing port 40 of the masking member 4 is made to have a shape based on the powder film F desired to be formed. The masking member 4 is not particularly limited as long as the masking member 4 is disposed in the state where the masking member 4 is not in contact with the powder film F to be formed (e.g., the masking member 4 is at a position spaced from the substrate 5 by not less than the thickness h of the powder film F to be formed (h ≤ D)). Naturally, a distance D between the masking member 4 and the substrate 5 may be fixed or varied as long as the distance D is not less than the thickness h of the powder film F to be formed. The case where the distance D between the masking member 4 and the substrate 5 is varied, particularly the case where the distance D is varied after the powder film F has been formed will be described in Embodiments 2 and 3 described later.

The actions of the electrostatic film formation device 1 will be described below.

As illustrated in FIG. 1, the powder P on the electrostatic screen printing plate 20 is rubbed into the screen 21 by the rubbing body 22 and becomes negatively charged by the application of the negative voltage by the DC power supply 3. The powder P that has been rubbed into the screen 21 and has become negatively charged is drawn by electrostatic force to the substrate 5 that has become positively charged by the application of the positive voltage by the DC power supply 3. The powder P from the screen 21 passes through the passing port 40 of the masking member 4 disposed between the screen 21 and the substrate 5 and is then deposited on the substrate 5, thus forming the powder film F. Since the powder film F is formed from the powder P that has passed through the passing port 40, the powder film F is formed into a shape based on the passing port 40.

As illustrated in FIG. 2, the powder film F formed on the substrate 5 does not adhere to the masking member 4. Therefore, the powder film F is not damaged when the masking member 4 is dismounted from the substrate 5.

In this manner, in the electrostatic film formation device 1, the formed powder film F is not damaged by the masking member 4. Therefore, the electrostatic film formation device 1 can form the powder film F with high precision.

### [Embodiment 2]

An electrostatic film formation device 1 according to Embodiment 2 of the present invention will be described with reference to FIG. 3 to FIG. 5. The present Embodiment 2 will be described with attention paid to a configuration that is not described in Embodiment 1. The same configuration as in Embodiment 1 will be denoted by the same reference numeral, and the description of the configuration will be omitted.

As illustrated in FIG. 3, the electrostatic film formation device 1 according to the present Embodiment 2 includes a spacer 6 that is disposed between the masking member 4 and the substrate 5. The spacer 6 is disposed outside the powder film F to be formed on the substrate 5. In other words, the spacer 6 is disposed outside the passing port 40. This prevents the deflection of the powder P outward from the powder film F desired to be formed, which is likely to occur when the powder P has a small particle size. The spacer 6 may be of an opened type, which has an opening 60 inside which the powder film F is to be formed. In the spacer 6 of the opened type, the edges of the opening 60 are positioned outside the passing port 40 of the masking member 4.

The spacer 6 is preferably an insulator. This lowers an electric field (voltage) in the vicinity of the spacer 6, and the spacer 6 resists attracting the powder P. As a result, the deflection of the powder P outward from the powder film F desired to be formed is further prevented.

The spacer 6 need not necessarily be in contact with both the masking member 4 and the substrate 5. The spacer 6 may be in contact with one of the masking member 4 and the substrate 5 (preferably with the masking member 4). Even when the spacer 6 is not in contact with the masking member 4 and/or the substrate 5 (i.e., the spacer 6 has gaps with the masking member 4 and/or the substrate 5), the deflection of the powder P outward from the powder film F desired to be formed is further prevented when the gaps are sufficiently small. It is however preferable that the spacer 6 have elasticity and be in close contact with the masking member 4 and the substrate 5. This causes the masking member 4 and the substrate 5 to receive reaction forces due to an elastic force from the spacer 6. As a result, the masking member 4 and the substrate 5 are in close contact with the spacer 6 sufficiently, thus blocking the powder P. Therefore, the deflection of the powder P outward from the powder film F desired to be formed is further prevented. The spacer 6 is, for example, a sponge, a piece of rubber, or the like.

The DC power supply 3 also applies to the masking member 4 voltage having the same polarity as the voltage to the substrate 5. That is, when applying a positive voltage to the substrate 5, the DC power supply 3 also applies the positive voltage to the masking member 4. This causes the powder P that does not pass through passing port 40 to be adsorbed onto the masking member 4. Therefore, the powder P does not adhere to the powder film F formed on the substrate 5. The DC power supply 3 is preferably connected to an earth E.

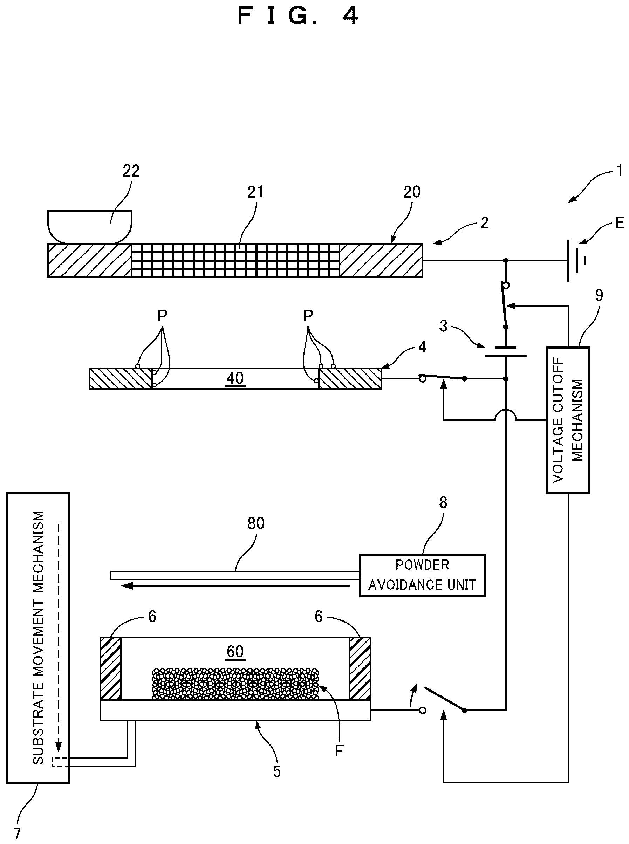

The electrostatic film formation device 1 includes a substrate movement mechanism 7 (an example of a movement mechanism) that moves the substrate 5, as illustrated in FIG. 3 and FIG. 4. The substrate movement mechanism 7 is a mechanism that separates the powder feeder 2 and the substrate 5 from each other until an electric field between the powder feeder 2 and the substrate 5 assumes a value less than a predetermined value. Here, the predetermined value of the electric field is such a value of the electric field that the shape of the powder film F formed on the substrate 5 is not broken by electrostatic force from the powder feeder 2 even when the voltage applied to the substrate 5 is cut off. For example, the predetermined value is 0.1 kV/mm (which differs among different materials of the powder P). An example in which the electric field assumes the value less than the predetermined value is the case where the distance between the powder feeder 2 and the substrate 5 is 20 mm or more under such a condition that the voltage applied by the DC power supply 3 is 2 kV. An area by which the powder feeder 2 and the substrate 5 face is preferably 10 mm² to 100 mm^{2.} With the substrate movement mechanism 7, even when the voltage applied to the substrate 5 is cut off, the electrostatic force does not isolate powder P from the powder film F formed on the moved substrate 5, and the electrostatic force does not roughen the surfaces of the powder film F.

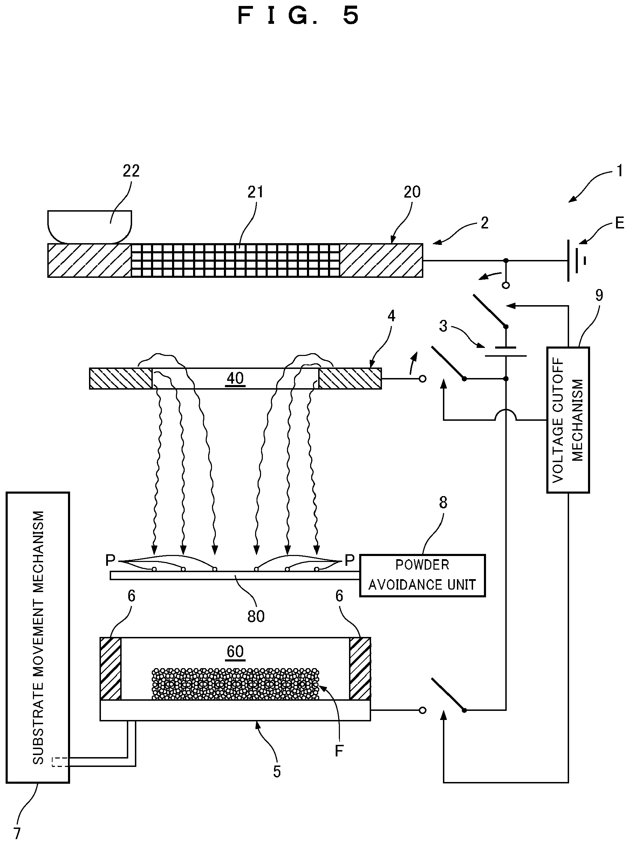

The electrostatic film formation device 1 includes a powder avoidance unit 8 that prevents powder P isolated from the masking member 4 from adhering to the powder film F formed on the substrate 5. The powder avoidance unit 8 receives the powder P from the masking member 4 by, for example, stretching a cover 80 with which the powder film F is covered, as illustrated in FIG. 4 and FIG. 5.

The electrostatic film formation device 1 includes a voltage cutoff mechanism 9 that cuts off the voltage applied by the DC power supply 3. The voltage cutoff mechanism 9 cuts off the voltage applied to the substrate 5 after the substrate 5 is moved by the substrate movement mechanism 7, as illustrated in FIG. 4. The time when the voltage applied to the substrate 5 is cut off may be before the state where the powder avoidance unit 8 prevents the powder P isolated from the masking member 4 from adhering to the powder film F is brought about. Alternatively, the time may be when the state is brought about. The voltage cutoff mechanism 9 cuts off the voltage applied to the powder feeder 2 and the masking member 4 in the state where the powder avoidance unit 8 prevents the powder P isolated from the masking member 4 from adhering to the powder film F, as illustrated in FIG. 5. When the voltage applied to the powder feeder 2 and the masking member 4 is cut off, powder P is isolated from the powder feeder 2 or the masking member 4. The powder avoidance unit 8 prevents the powder P from adhering to the powder film F on the substrate 5.

The actions of the electrostatic film formation device 1 will be described below.

As illustrated in FIG. 3, the powder P from the screen 21 forms the powder film F on the substrate 5. The spacer 6 prevents the powder P from deflecting outward from the powder film F being formed.

After the powder film F is formed on the substrate 5, the substrate movement mechanism 7 moves the substrate 5, and the powder feeder 2 and the substrate 5 are separated from each other until the electric field between the powder feeder 2 and the substrate 5 assumes the value less than the predetermined value, as illustrated in FIG. 4. Subsequently, the voltage cutoff mechanism 9 cuts off the voltage applied to the substrate 5. Since the value of the electric field between the powder feeder 2 and the substrate 5 is less than the predetermined value, the shape of the powder film F formed on the substrate 5 is not broken even if the application of the voltage to the powder feeder 2 by the DC power supply 3 is continued. That is, the powder P of the powder film F is not isolated from the powder film F, and the surfaces of the powder film F are not roughened. On the other hand, the powder avoidance unit 8 stretches the cover 80 with which the powder film F is covered. This brings about the state where the powder P isolated from the powder feeder 2 or the masking member 4 is prevented from adhering to the powder film F.

Next, the voltage cutoff mechanism 9 cuts off the voltage applied to the powder feeder 2 and the masking member 4, as illustrated in FIG. 5. When the voltage applied to the powder feeder 2 and the masking member 4 is cut off, powder P that remains on the powder feeder 2 and the masking member 4 is isolated from the powder feeder 2 or the masking member 4. The isolated powder P is received by the cover 80 of the powder avoidance unit 8 and does not adhere to the powder film F on the substrate 5.

In this manner, the electrostatic film formation device 1 according to the present Embodiment 2 produces the effects described in Embodiment 1. In addition, the spacer 6 prevents the deflection of the powder P outward from the powder film F, and the substrate movement mechanism 7, the powder avoidance unit 8, and the voltage cutoff mechanism 9 prevent the shape of the formed powder film F from being broken and prevent the powder P from the powder feeder 2 or the masking member 4 from adhering to the powder film F. Therefore, the electrostatic film formation device 1 according to the present Embodiment 2 can form the powder film F with higher precision.

### [Embodiment 3]

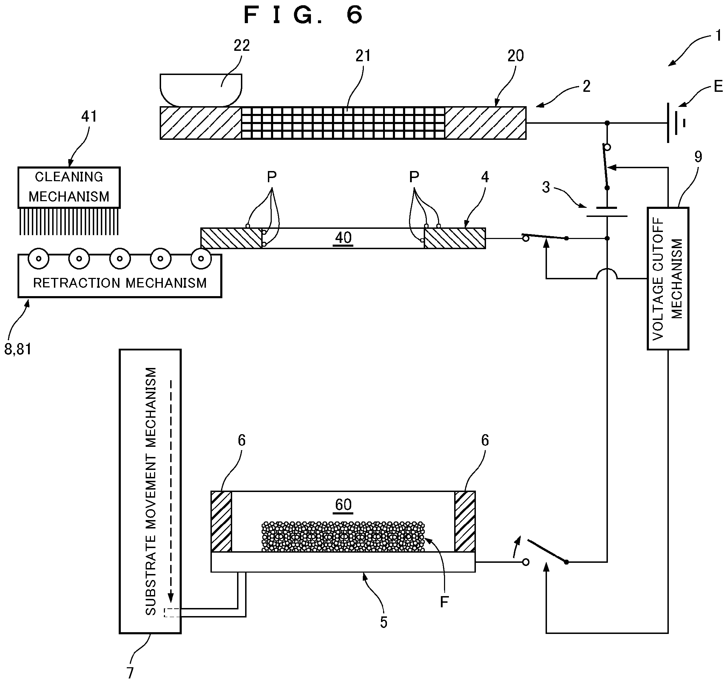

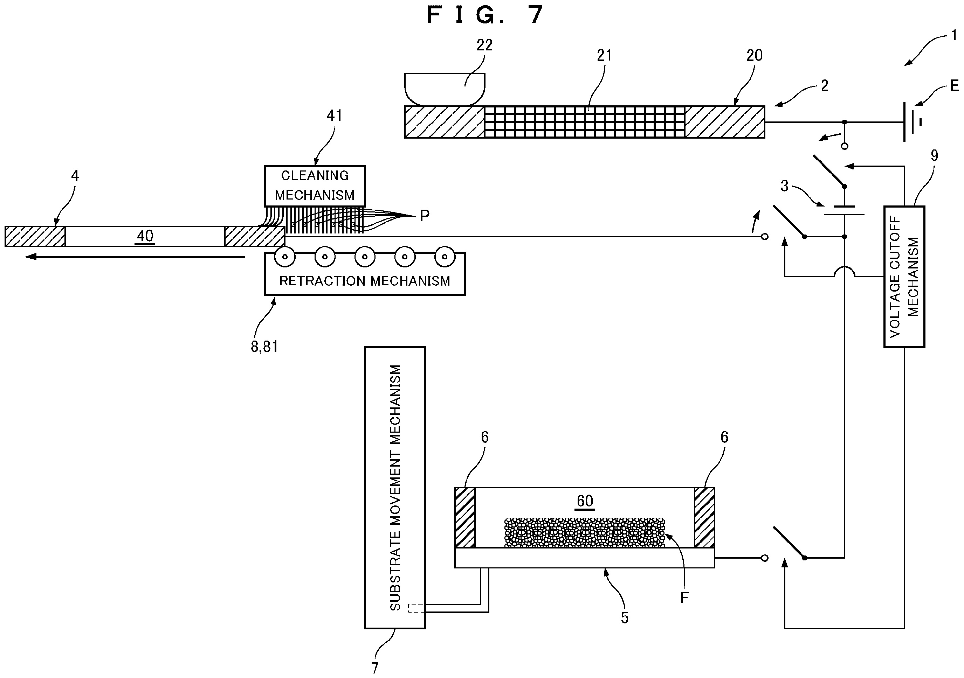

An electrostatic film formation device 1 according to Embodiment 3 of the present invention will be described with reference to FIG. 6 and FIG. 7. The present Embodiment 3 will be described with attention paid to a configuration that is not described in Embodiments 1 and 2. The same configuration as in Embodiments 1 and 2 will be denoted by the same reference numeral, and the description of the configuration will be omitted.

As illustrated in FIG. 6 and FIG. 7, the electrostatic film formation device 1 according to the present Embodiment 3 includes, in the electrostatic film formation device 1 according to Embodiment 2, the powder avoidance unit 8 is a retraction mechanism 81 described later, and further includes a cleaning mechanism 41 described later.

The retraction mechanism 81 of the electrostatic film formation device 1 retracts the masking member 4 to the position at which powder P isolated from the masking member 4 does not adhere to the powder film F. The cleaning mechanism 41 removes powder P from the retracted masking member 4. Examples of the cleaning mechanism 41 include a sponge, a brush, and a scraper. Note that the retracted masking member 4 means both the masking member 4 being retracted and the masking member 4 having been retracted.

In the case where the electrostatic film formation device 1 is configured to form a plurality of powder films F, the retraction mechanism 81 and the cleaning mechanism 41 preferably retract the masking member 4 and remove powder P from the masking member 4 every time one powder film F is formed on the substrate 5. This further prevents the powder P from the masking member 4 from adhering to the plurality of formed powder films F.

The actions of the electrostatic film formation device 1 will be described below.

After the powder film F is formed on the substrate 5, the substrate movement mechanism 7 moves the substrate 5, and the voltage cutoff mechanism 9 cuts off the voltage applied to the substrate 5, as illustrated in FIG. 6. On the other hand, the retraction mechanism 81 retracts the masking member 4 to the position at which the powder P isolated from the masking member 4 does not adhere to the powder film F, as illustrated in FIG. 7. From the retracted masking member 4, the powder P is removed by the cleaning mechanism 41. The time when the powder P on the masking member 4 is removed by the cleaning mechanism 41 may be before the voltage cutoff mechanism 9 cuts off the voltage applied to the powder feeder 2 and the masking member 4. Alternatively, the time may be after the cutting-off. It is preferable to remove the powder P on the masking member 4 by the cleaning mechanism 41 after the cutting-off so that the cleaning mechanism 41 is not charged.

In this manner, the electrostatic film formation device 1 according to the present Embodiment 3 produces the effects described in Embodiments 1 and 2. In addition, the retraction mechanism 81 and the cleaning mechanism 41 further prevent powder P from the masking member 4 from adhering to the powder film F. Therefore, the electrostatic film formation device 1 according to the present Embodiment 3 can form the powder film F with significantly high precision.

A method for manufacturing an all-solid secondary battery using the electrostatic film formation device 1 will be described below with reference to the drawings. Although the drawings illustrate an example in which the electrostatic film formation device 1 according to Embodiment 2 or 3 is used, the electrostatic film formation device 1 according to Embodiment 1 may be naturally used.

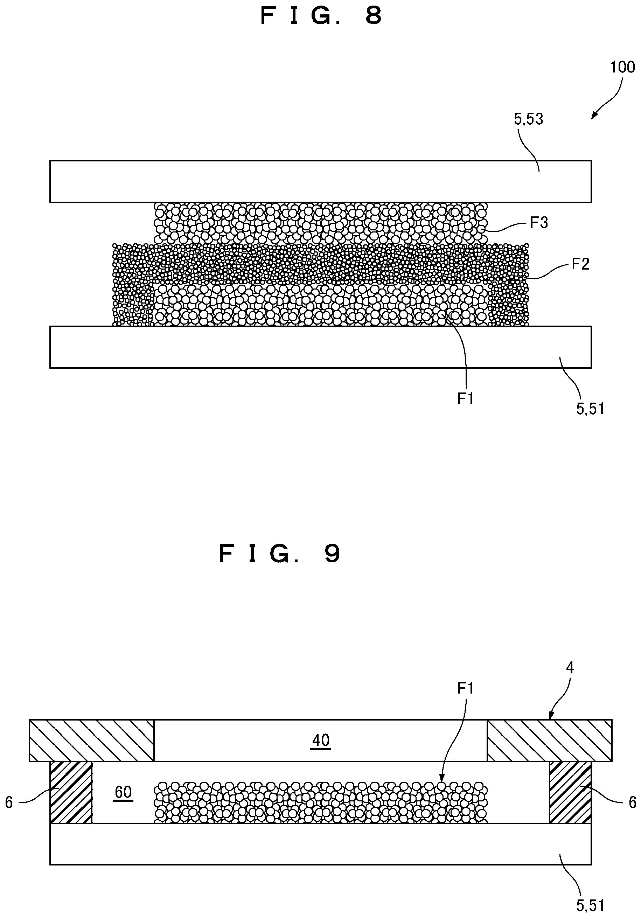

As illustrated in FIG. 8, the all-solid secondary battery 100 includes, as electrode current collectors 5, a positive electrode current collector 51 and a negative electrode current collector 53. The all-solid secondary battery 100 also includes three-layer powder films F1 to F3 that are disposed between the positive electrode current collector 51 and the negative electrode current collector 53. Of these three-layer powder films F1 to F3, the powder film F1 that is in contact with the positive electrode current collector 51 is a positive electrode layer F1, the powder film F3 that is in contact with the negative electrode current collector 53 is a negative electrode layer F3, and the powder film F2 that is between the positive electrode layer F1 and the negative electrode layer F3 is a solid electrolyte layer F2.

As illustrated in FIG. 9, the method for manufacturing the all-solid secondary battery 100 includes: a step of preparing the positive electrode current collector 51 (or the negative electrode current collector 53) as the substrate 5 of the electrostatic film formation device 1; and a step of forming, by the electrostatic film formation device 1, the powder film F1 (F3) being the positive electrode layer F1 (or the negative electrode layer F3) on the substrate 5 being the positive electrode current collector 51 (or the negative electrode current collector 53).

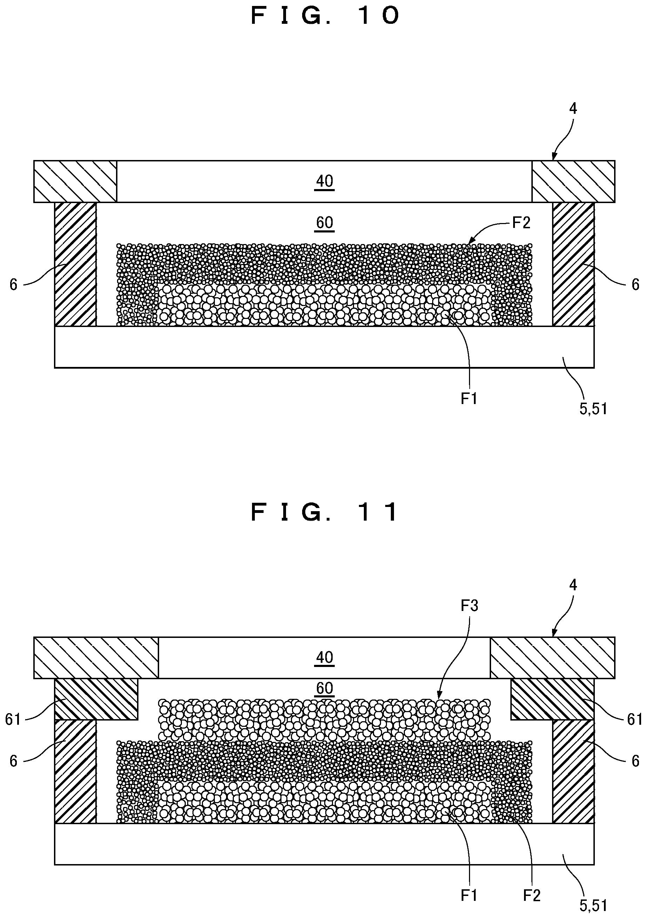

It is preferable that, as illustrated in FIG. 10, the method for manufacturing the all-solid secondary battery 100 further include a step of forming, by the electrostatic film formation device 1, the powder film F2 being the solid electrolyte layer F2 on the positive electrode layer F1 (or the negative electrode layer F3).

It is preferable that, as illustrated in FIG. 11, the method for manufacturing the all-solid secondary battery 100 further include a step of forming, by the electrostatic film formation device 1, the powder film F3 (F1) being the negative electrode layer F3 (or the positive electrode layer F1) on the solid electrolyte layer F2. If the powder film F3 (F1) being the negative electrode layer F3 (or the positive electrode layer F1) is expected to adhere to the masking member 4 in the formation of the powder film F3 (F1), that is, if the thickness of the spacer 6 is insufficient, an additional spacer 61 is stacked on the spacer 6.

Subsequently, as illustrated in FIG. 8, the negative electrode current collector 53 (or the positive electrode current collector 51) is disposed on the negative electrode layer F3 (or the positive electrode layer F1), and the three-layer powder films F1 to F3 are pressurized when necessary. The all-solid secondary battery 100 is thereby manufactured.

In this manner, the method for manufacturing the all-solid secondary battery 100 using the electrostatic film formation device 1 can form the powder films F1 to F3 included in the all-solid secondary battery 100 with high precision.

In Embodiments 1 to 3, the powder feeder 2, the masking member 4, and the substrate 5 are illustrated such that the powder feeder 2, the masking member 4, and the substrate 5 are disposed horizontally. However, the disposition of the powder feeder 2, the masking member 4, and the substrate 5 is not limited to the horizontal. The powder feeder 2, the masking member 4, and the substrate 5 may be inclined with respect to the horizontal.

In Embodiments 2 and 3, the substrate movement mechanism 7 that moves the substrate 5 has been described as an example of the movement mechanism. However, the movement mechanism is not limited particularly to the substrate movement mechanism 7. The movement mechanism may be a mechanism that moves the powder feeder 2 or may be a mechanism that moves the powder feeder 2 and the substrate 5 as long as the movement mechanism separates the powder feeder 2 and the substrate 5 from each other until the electric field between the powder feeder 2 and the substrate 5 assumes the value less than the predetermined value.

The method for manufacturing the all-solid secondary battery 100 has been described such that the electrostatic film formation device 1 is preferably used in the step of forming the powder film F2 being solid electrolyte layer F2 illustrated in FIG. 10 and the step of forming the powder film F3 (F1) being the negative electrode layer F3 (or the positive electrode layer F1) illustrated in FIG. 11. However, a film formation device of another type may be used in the steps.

In Embodiments 2 and 3, the powder avoidance unit 8 stretching the cover 80 illustrated in FIG. 4 and FIG. 5 and the retraction mechanism 81 illustrated in FIG. 6 and FIG. 7 have been described as examples of the powder avoidance unit 8. However, the powder avoidance unit 8 is not particularly limited to the powder avoidance unit 8 stretching the cover 80 and the retraction mechanism 81. As another example of the powder avoidance unit 8, the powder avoidance unit 8 may be a powder avoidance unit that inserts, between the masking member 4 and the substrate 5, a cover with which the masking member 4 is covered. In addition to the example described in Embodiment 3, the retraction mechanism 81 may be a retraction mechanism that retracts the substrate 5 to the position at which the powder P isolated from the masking member 4 does not adhere to the powder film F. The retraction mechanism 81 may be a retraction mechanism that retracts both the masking member 4 and the substrate 5. The powder avoidance unit 8 may be a powder avoidance unit that removes powder P that is about to adhere to the powder film F by suction, blowing, or the like.

Embodiments 1 to 3 are exemplifications in all respects and not limiting. The scope of the present invention is indicated by the scope of claims rather than the aforementioned descriptions. The equivalents of the scope of claims and all modifications within the scope of claims should be construed as being included in the present invention. Of the configurations described in Embodiments 1 to 3, the configurations other than the configuration described as a first invention in "Solution to Problem" are optional and may be removed and changed as appropriate.

## Claims

1. An electrostatic film formation device comprising:
a powder feeder that feeds powder;
a substrate on which a powder film is to be formed from the powder;
a DC power supply that applies voltage to the powder feeder and the substrate to draw the powder from the powder feeder to the substrate with electrostatic force; and
a masking member that is disposed between the powder feeder and the substrate and has a passing port allowing powder to pass from the powder feeder to the substrate, wherein
the masking member is disposed in a state where the masking member is not in contact with the powder film to be formed.

2. The electrostatic film formation device according to claim 1, further comprising
a spacer that is disposed between the masking member and the substrate,
wherein the spacer is disposed outside the powder film to be formed on the substrate.

3. The electrostatic film formation device according to claim 2, wherein the spacer is an insulator.

4. The electrostatic film formation device according to claim 2 or 3, wherein the spacer has elasticity and is in close contact with the masking member and the substrate.

5. The electrostatic film formation device according to any one of claims 1 to 3, wherein the DC power supply also applies, to the masking member, voltage having a polarity identical to a polarity of the voltage to the substrate.

6. The electrostatic film formation device according to claim 5, further comprising:
a movement mechanism that separates the powder feeder and the substrate from each other until an electric field between the powder feeder and the substrate assumes a value less than a predetermined value;
a powder avoidance unit that prevents the powder isolated from the masking member from adhering to the powder film formed on the substrate; and
a voltage cutoff mechanism that cuts off voltage applied to the powder feeder and the masking member by the DC power supply in a state where the powder does not adhere to the powder film formed on the substrate.

7. The electrostatic film formation device according to claim 6,
wherein the powder avoidance unit is a retraction mechanism that retracts the masking member to a position at which the powder isolated from the masking member does not adhere to the powder film formed on the substrate, and
the electrostatic film formation device further comprises a cleaning mechanism that removes the powder from the retracted masking member.

8. A method for manufacturing an all-solid secondary battery that includes an electrode current collector and a powder film, the method using the electrostatic film formation device according to any one of claims 1 to 3, the method comprising:
preparing the electrode current collector as the substrate of the electrostatic film formation device; and
forming, by the electrostatic film formation device, the powder film on the substrate being the electrode current collector.
